# DEMANDE DE BREVET EUROPEEN

(11) **EP 2 792 535 A1**
(43) Date de publication de la demande: **22.10.2014**
(21) Numéro de dépôt: 14160977.6
(22) Date de dépôt: 20.03.2014
(51) Int. Cl.: B60L 11/18

(54) **Module de charge pour rechargement électrique d'un véhicule électrique**

(30) Priorité: 16.04.2013 FR 1353416
(71) Demandeur: Bluecarsharing, 92420 Vaucresson (FR)
(72) Inventeur: Courtial, Clément, 91400 ORSAY (FR); Charrier, Bruno, 94500 CHAMPIGNY (FR)
(74) Mandataire: Pontet Allano & Associes

(57) **Abrégé**

L'invention a pour objet un module de charge pour la recharge électrique d'un véhicule électrique, comprenant des moyens de connexion électriques aptes à coopérer avec des moyens complémentaires du véhicule, le module comprenant un socle (30A,30B,30C,30D,30E,30F,30G,30H,30I,30J,30K) et un corps de borne (40), et étant caractérisé en ce qu'il est configuré de sorte que le corps de borne (40) soit mobile en rotation relativement au socle (30A,30B,30C,30D,30E,30F,30G,30H,30I,30J,30K), de sorte que le corps ne puisse pas effectuer une rotation d'un angle supérieur à un angle de seuil, inférieur à 360°.

## Description

L'invention concerne une borne de charge pour recharger électriquement un véhicule électrique, à savoir un véhicule fonctionnant à l'aide d'un moteur électrique et alimenté par une batterie située à bord d'un véhicule.

Une telle borne est bien connue de l'état de la technique. Elle est généralement placée sur la voie publique et comprend des moyens de connexion coopérant avec des moyens de connexion complémentaire du véhicule, afin de relier électriquement le véhicule à la borne. Les moyens de connexion de la borne sont également reliés au réseau électrique général par l'intermédiaire de câbles circulant à l'intérieur de la borne.

Elle est généralement placée au voisinage d'un emplacement de stationnement pour un véhicule électrique, afin que les moyens de connexion du véhicule se trouvent à proximité de la borne lorsque le véhicule est en stationnement.

Il est cependant quelquefois difficile d'installer des bornes - dont le volume minimal est assez important au vu des nombreux éléments électriques qu'elle contient - à proximité d'emplacements de stationnement sélectionnés, tels que des emplacements situés dans des parkings souterrains, car on manque d'espace libre à proximité de ces emplacements.

L'invention a pour but de remédier à ces inconvénients en fournissant une borne apte à être placée dans un espace réduit.

L'invention a pour objet un module de charge pour la recharge électrique d'un véhicule électrique, comprenant des moyens de connexion électriques aptes à coopérer avec des moyens complémentaires du véhicule, le module comprenant un socle et un corps de borne, et étant configuré de sorte que le corps de borne soit mobile en rotation relativement au socle, et de sorte que le corps ne puisse pas effectuer une rotation d'un angle supérieur à un angle de seuil, inférieur à 360°.

Ainsi, pour une borne ayant les mêmes dimensions que dans l'état de la technique, on est en mesure de déplacer si besoin le corps de borne, ce qui permet d'éviter de devoir prévoir à l'arrière de la borne, au niveau de laquelle se situe généralement une trappe pour la maintenance électrique de la borne, un volume dédié à l'accès d'un opérateur ou de changer la conception de bornes préexistantes pour placer toutes les fonctions à l'avant de la borne, ce qui nécessiterait également d'augmenter son volume.

En outre, le déplacement de la borne étant effectué par rotation, la borne occupe essentiellement le même volume qu'elle soit dans une orientation de fonctionnement ou dans une orientation de maintenance, et aucun volume n'est perdu du fait qu'on prévoit le déplacement de la borne.

On notera également que la conception du module limitant la rotation de la borne à un angle de seuil permet de tenir compte d'un besoin spécifique de la borne de charge, à savoir d'éviter la torsion des câbles électriques situés dans le corps de la borne, ces câbles permettant de relier les moyens de connexion électrique au réseau électrique. On évite ainsi d'endommager les câbles par la rotation de la borne et on assure que le mouvement de rotation imprimé à la borne n'influe pas sur sa durée de vie.

Les câbles sont disposés essentiellement verticalement dans le corps de borne et sont destinés à relier les moyens de connexion électrique et un réseau électrique, notamment le réseau électrique urbain.

Le corps de borne peut également être muni de moyens de détection aptes à détecter la présence d'un véhicule sur un emplacement de stationnement associé au module de charge. De tels moyens peuvent notamment comprendre des moyens d'émission-réception d'ondes de type infrarouge.

Dans ce cas, la fonction de rotation de la borne est d'autant plus avantageuse qu'elle permet de régler précisément l'orientation de fonctionnement de la borne en fonction de la disposition de la borne par rapport à l'emplacement de stationnement de sorte que les moyens de détection fonctionnent de façon optimale. Comme l'orientation de fonctionnement de la borne est réglable, on gagne alors encore en souplesse pour le positionnement de la borne, dans le cas où l'espace libre à proximité de l'emplacement de stationnement est rare. La borne peut ne pas nécessairement être placée juste en face de l'emplacement de stationnement. De plus, il n'est pas nécessaire de se préoccuper de l'orientation de la borne au moment de son installation relativement à la voie publique puisque cette orientation pourra être modifiée ultérieurement, ce qui facilite son installation.

Le module de charge selon l'invention pourra également comprendre l'une ou plusieurs des caractéristiques de la liste suivante :
- le module comprend des moyens de verrouillage amovibles du corps de borne dans une orientation prédéterminée, correspondant notamment à l'orientation de fonctionnement, ce qui permet de n'autoriser la rotation du corps de la borne que lorsque cela est strictement nécessaire (généralement pour des besoins de maintenance) et d'éviter le vandalisme de la borne ou son endommagement par usure du système mécanique permettant la rotation. De préférence, ces moyens ne sont pas visibles et/ou ne sont accessibles qu'à l'aide d'une clé ou d'un outil spécifique,
- le corps de borne est fixé sur un plateau apte à être mobile en rotation relativement au socle, ce qui permet de pouvoir réaliser plus facilement des aménagements sur le corps de borne si nécessaire, un plateau standard permettant la rotation de différents corps de borne en fonction des besoins spécifiques à chaque emplacement,
- le plateau comprend alors un orifice de passage des câbles, de façon à pouvoir faire passer les câbles du corps de la borne au réseau électrique, le plus souvent enterré dans le sol,
- le module est configuré de sorte que le plateau comprend au moins une butée, notamment une seule, apte à coopérer avec une butée complémentaire, notamment une seule, du socle afin d'empêcher la rotation du plateau au-delà de l'angle prédéterminé. L'angle de seuil est de préférence un angle de 360°, la rotation de 180° environ entre l'orientation de fonctionnement et l'orientation de maintenance étant alors possible selon les deux sens de rotation. Toutefois, en fonction de l'orientation de fonctionnement choisie (par rapport aux moyens de détection par exemple), il peut y avoir une dissymétrie et l'angle parcouru entre les orientations de fonctionnement et d'arrêt peut être légèrement supérieur dans l'un des sens de rotation,
- le socle présente une ouverture ronde et un support sur lequel est agencé le plateau, notamment avec interposition d'au moins une bague de glissement, le plateau étant de forme complémentaire de celle de l'ouverture et le support étant agencé de sorte que le plateau est inséré dans l'ouverture. Ainsi, les moyens de déplacement de l'invention ne nécessitent pas l'installation d'un axe de rotation. Le déplacement en translation du plateau est empêché par la configuration du support et la forme de l'ouverture. Le déplacement en rotation est en revanche permis par la forme ronde du plateau. La bague de glissement permet à un opérateur de pouvoir déclencher le mouvement de rotation assez facilement, en limitant le frottement du plateau sur le support. Le module selon ce mode de réalisation autorise donc la rotation du corps de borne sans pour autant être coûteux,
- le support peut notamment comprendre une pièce d'un seul tenant, par exemple de forme complémentaire de celle du plateau ou une pluralité de pièces essentiellement linéaires placées autour de l'ouverture. Cette deuxième option permet de faire face plus facilement aux dispersions des dimensions du plateau tout en éliminant les mouvements de translation du plateau. Elle est également avantageuse car la fabrication des pièces de profil linéaire est également plus simple et moins coûteuse,
- les butées peuvent être constituées par des portions en saillie du plateau et du support. Alternativement, les butées pourraient être constituées d'une portion en saillie du plateau qui s'engage dans un canal du support pour le guidage du plateau, les extrémités du canal formant les butées,
- les moyens de verrouillage comprennent une collerette chevauchant le plateau, de préférence sur tout son pourtour, et montée serrée sur le socle, notamment par vissage, de façon à empêcher la rotation du plateau en comprimant celui-ci. De plus, elle autorise le verrouillage du corps de la borne (notamment du plateau) relativement au socle (notamment au support) en plusieurs positions, pour permettre plus de flexibilité dans le positionnement du corps de la borne. Il suffit en effet de serrer la collerette lorsque l'orientation de fonctionnement du plateau est déterminée,
- le socle comprend une dalle autoportée, le support étant solidaire de la dalle. Cela permet de pouvoir plus facilement placer une borne de charge dans des endroits dans lesquels il est difficile d'enterrer le support dans le sol, notamment dans les parkings souterrains, présentant généralement une structure fragile. Le module de charge est alors également beaucoup plus simple à retirer et/ou remplacer en fin de vie et/ou en cas de suppression ou modification du service de charge.

L'invention a également pour objet une station de charge pour la recharge électrique de véhicules électriques, comprenant au moins un module de charge selon l'invention. Les supports des différentes bornes de charge sont alors de préférence d'un seul tenant. La station peut également comprendre d'autres éléments d'un seul tenant avec les supports, tels qu'une borne de location, un panneau d'information, etc. Elle est de préférence constituée de dalles autoportées assemblées.

On va maintenant décrire le module grâce aux dessins montrant un exemple de réalisation du module selon l'invention. En particulier, les dessins décrivent :
- la figure 1 est une vue en perspective d'une borne selon un mode de réalisation de l'invention,
- la figure 2 est une vue en coupe de la borne de la figure 1,
- la figure 3 est une vue en perspective d'une dalle autoportée destinée à porter une borne pour former un module de charge selon un mode de réalisation de l'invention,
- la figure 4 est une vue en coupe de la dalle de la figure 3 pour montrer le mécanisme rotatif de la borne,
- la figure 5 est une vue de dessous de la dalle dans laquelle la paroi inférieure a été cachée pour rendre le mécanisme de rotation mieux visible,
- la figure 6 est une vue d'une station de charge selon un mode de réalisation de l'invention.

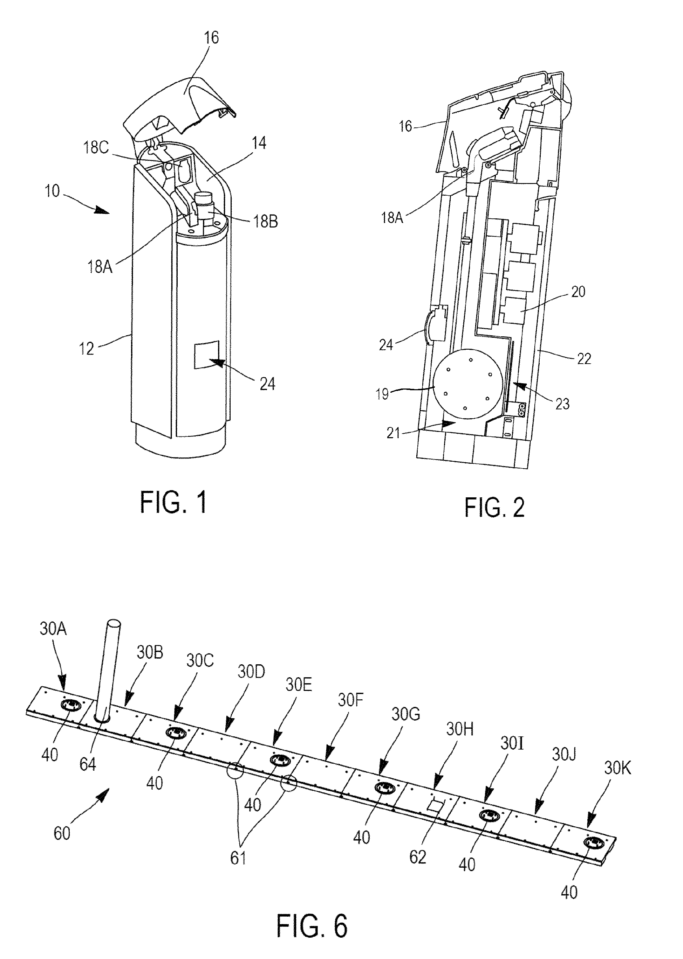

On a représenté sur la figure 1 un corps de borne 10 appartenant à un module de charge selon l'invention, le corps de borne comportant une enveloppe 12, et en partie supérieure, une zone technique 14, et un couvercle 16 destiné à recouvrir la zone technique 14 et mobile en rotation entre une position d'ouverture dans laquelle il laisse libre l'accès à la zone technique depuis l'avant de la borne et une position de fermeture dans laquelle il empêche l'accès à ladite zone 14. Le couvercle est verrouillable en position ouverte et en position fermée, notamment à l'aide de moyens de verrouillage magnétique.

Comme on le voit sur la figure 1, le corps de borne 10 comprend, dans la zone technique, une pluralité de connecteurs 18A, 18B (connecteurs mâles), et 18C (connecteur femelle). Les connecteurs permettent de connecter un véhicule électrique à la borne de charge. On remarque que les connecteurs 18B et 18C sont complémentaires.

On peut en effet connecter la borne à un véhicule dont le moyen de connexion est complémentaire du connecteur 18C, auquel cas on branche directement ce connecteur du véhicule sur le connecteur 18C.

On peut également connecter à la borne un véhicule dont le moyen de connexion est complémentaire du connecteur 18A. Dans ce cas, on branche le connecteur 18A dans le connecteur complémentaire du véhicule et on branche le connecteur 18B dans le connecteur complémentaire 18C. Les connecteurs 18B et 18A sont en effet reliés par l'intermédiaire d'un câble enroulé sur un enrouleur 19 placé dans le corps de la borne, notamment dans un compartiment avant 21 de celle-ci et visible sur la figure 2.

Le connecteur 18C est relié au réseau électrique, par l'intermédiaire de boîtiers de contrôle électrique 20 visibles également sur la figure 2, placés dans un compartiment arrière 23 du corps de borne et accessible par un opérateur de maintenance par le biais d'une porte 22 verrouillable, placée sur la paroi arrière du corps de borne, et mobile en rotation entre une position d'ouverture et une position de fermeture. Des câbles d'alimentation électrique reliant les moyens de connexion de la borne au réseau électrique s'étendent depuis les boîtiers de connexion 20 jusqu'à l'extrémité inférieure du corps de borne 10, essentiellement verticalement. Le corps de borne 10 est ouvert en partie inférieure du compartiment 23 pour permettre le passage des câbles à l'extérieur de la borne, sans accessibilité à ces câbles pour l'utilisateur.

La borne 10 comprend également un détecteur de présence 24 sur la face avant de la borne 10 pour détecter si un véhicule est présent sur l'emplacement de stationnement associé à la borne de charge. Ce détecteur comprend notamment un capteur optique, notamment infrarouge, permettant l'émission et la réception des ondes infrarouges.

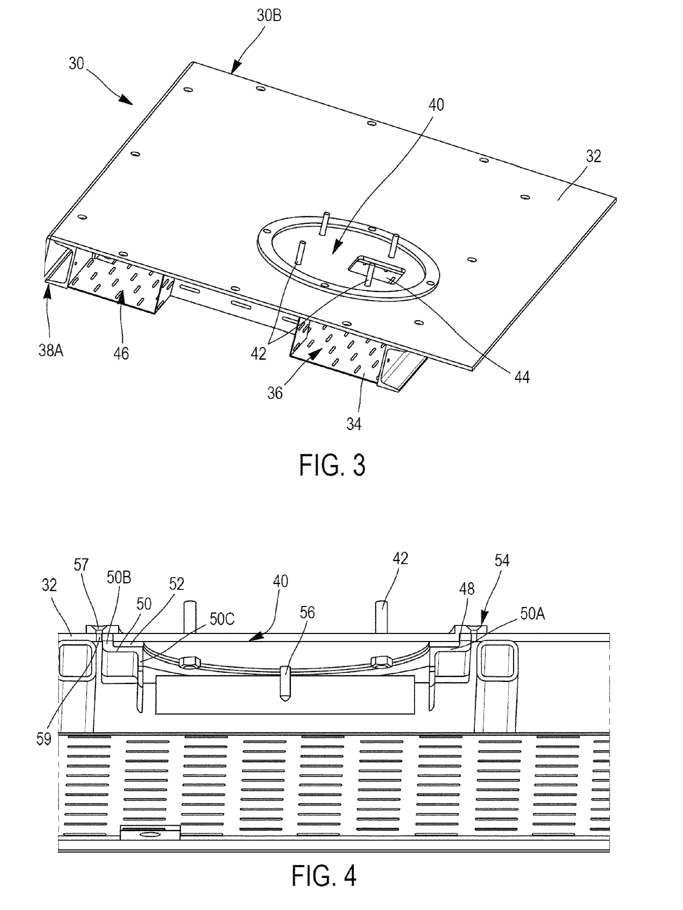

Le corps de borne 10 est placé sur un socle 30 (visible sur les figures 3 à 5) formé par une dalle autoportée comportant une paroi supérieure 32, une paroi inférieure 34, et un espace intérieur 36 étant délimité entre ces deux parois. Ce socle 30 est destiné à être assemblé à d'autres socles de mêmes dimensions au niveau de ses extrémités longitudinales 38A, 38B pour former une station de charge.

Le socle accueille un plateau 40 comportant des moyens de fixation 42 constitués notamment par des vis et permettant de relier le plateau au corps de borne (ce dernier comprenant des orifices complémentaires sur sa paroi de fond). Le plateau est mobile en rotation relativement à la paroi supérieure du socle et il comprend également une ouverture 44 pour le passage des câbles depuis le compartiment arrière 23 du corps 10 de la borne vers le réseau électrique. Le socle 30 comprend d'ailleurs un chemin de guidage 46 des câbles dans l'espace 36 délimité entre les parois supérieure et inférieure 32 et 34. Ce chemin de guidage 46 s'étend entre les extrémités longitudinales 38, 38B de la dalle.

Comme on le voit sur la figure 4, le plateau 40 est mis en place dans une ouverture circulaire 48 de la paroi supérieure 32, de dimensions identiques à celles du plateau. Le plateau est ainsi de forme complémentaire à l'ouverture. Il est placé sur un support constitué par quatre cornières 50 situées au voisinage de l'ouverture et reliées à la paroi supérieure 32, avec interposition d'une bague de glissement 52, mise en place préalablement sur le plateau 40. Les cornières permettent de positionner le plateau 40 dans l'ouverture.

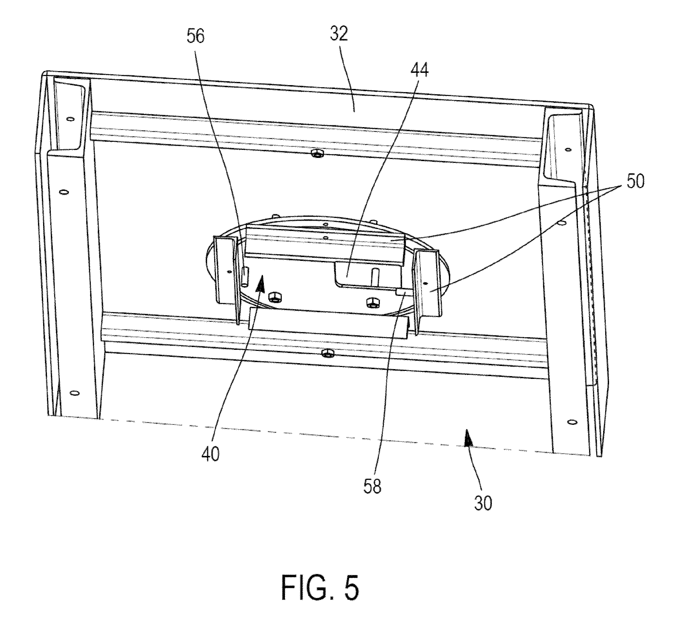

Comme cela est mieux visible sur la figure 5, les quatre cornières sont constituées par des profilés linéaires comprenant un plan d'appui 50A pour la bague de glissement, essentiellement parallèle à la paroi supérieure 32, et une paroi 50B perpendiculaire au plan d'appui s'étendant entre ce plan et la paroi supérieure 32 de la dalle 30, ainsi qu'une paroi de renfort 50C faisant saillie de la paroi formant plan d'appui 50A en direction de la paroi inférieure. Les profilés sont placés à équidistance du centre du plateau de sorte que le plateau soit tangent à la paroi 50B de chacune des cornières en un lieu de chacune des cornières. De cette façon, la translation du plateau selon le plan horizontal est interdite selon les deux directions de ce plan. Au vu de la forme ronde du plateau et du placement des cornières, dont la paroi 50B ne gêne pas le mouvement de la bague ou du plateau, la rotation selon un axe vertical est tout de même autorisée.

Une collerette 54 est également placée au-dessus de la paroi supérieure 32, de façon à chevaucher la paroi supérieure 32 ainsi que le plateau 40, de façon à empêcher le mouvement du plateau vers le haut et la sortie de la borne de charge de son logement. La collerette est reliée à la paroi supérieure 32 par des moyens de vissage s'engageant dans des orifices superposés 57, 59 de la collerette et de la paroi supérieure 32. Elle est montée serrée sur cette paroi de façon à comprimer le plateau 40 sur tout son pourtour et à empêcher ainsi le déplacement en rotation du plateau selon un axe vertical. Le serrage de la collerette 54 est effectué lorsque la configuration de fonctionnement normal de la borne a été déterminée (face avant de la borne en regard de l'emplacement de stationnement).

Le plateau 40 comprend également un taquet anti-rotation 56 s'étendant en saillie vers le bas et destiné à venir en butée contre une butée complémentaire 58 de l'une des cornières, s'étendant vers la cornière opposée, comme on le voit en particulier sur la figure 5. Cela permet d'arrêter la rotation du plateau 40 lorsque le taquet 56 vient en butée contre la butée 58 de la cornière.

En configuration de fonctionnement, telle que montrée à la figure 5, le taquet du plateau et la butée de la cornière sont placés de sorte que la face avant de la borne se trouve en regard de l'emplacement de stationnement et que le taquet 56 se trouve essentiellement à l'extrémité opposée du plateau relativement à la butée 58 du support. Ainsi, le plateau 40 peut être déplacé d'un angle d'environ 180° dans chacun des sens de rotation relativement au support par rapport à la configuration de fonctionnement de sorte que la borne peut être placée en position de maintenance avec sa porte arrière 22 tournée vers l'emplacement de stationnement. La butée anti-rotation 58 permet d'éviter une rotation trop importante de la borne qui entraînerait un enroulement des câbles électriques circulant dans la borne et s'étendant essentiellement verticalement dans celle-ci. Ainsi, la rotation maximale qui peut être effectuée par la borne ne dépasse un angle de seuil inférieur à 360°. Cet angle varie en fonction de la position du taquet 56 relativement à la butée 58 dans la configuration de fonctionnement.

On va maintenant décrire un exemple de station selon un mode de réalisation de l'invention. Cette station 60 représentée à la figure 6 est composée de onze dalles autoportées 30A-30K, comportant comme décrit ci-dessus une paroi supérieure 32, une paroi inférieure 34 entre lesquelles s'étend un espace vide 36, et un canal de guidage 46 pour les câbles. Ces dalles autoportées sont assemblées de sorte que leurs extrémités longitudinales 38A, 38B soient disposées côte à côte. Ainsi, le canal de guidage des câbles 46 s'étend continûment dans la totalité des dalles sur toute la dimension longitudinale de la station. Les différentes dalles sont reliées entre elles par vissage au niveau des extrémités longitudinales respectives 38A, 38B de deux dalles adjacentes, à l'aide de plaquettes vissées sur chacune des dalles adjacentes. Pour cela, les dalles comprennent des orifices de fixation 61 au voisinage de chacune de leurs extrémités longitudinales.

Certaines des dalles 30A, 30C, 30E, 30G, 30I, 30K comprennent un arrangement (support et plateau) pour une borne de charge rotative, tandis que d'autres dalles comprennent des supports pour d'autres types de bornes, par exemple un support 62 pour une borne de location ou un conduit 64 permettant l'arrivée des câbles électriques dans la station. Certaines dalles servent juste d'entretoises entre deux dalles portant un élément fonctionnel et comportent une paroi supérieure pleine.

Une telle station est particulièrement utilisée dans un environnement dans lequel on ne peut pas enterrer les bornes de charge, notamment dans les parkings souterrains (du fait de la fragilité de la structure bétonnée formant le sol d'un tel parking). La structure formant la station et constituée de la pluralité de dalles 30 est également fermée à ses extrémités longitudinales par des parois d'extrémités, ce qui permet d'assurer que les câbles ne soient pas accessibles depuis l'extérieur.

On notera que l'invention n'est pas limitée à ce qui a été décrit ci-dessus et de nombreuses modifications pourraient être apportées au mode de réalisation décrit tout en restant dans le cadre de l'invention.

En particulier, la station peut ne pas être constituée par différentes dalles autoportées. Les différents supports des bornes peuvent être enterrés dans le sol. En outre, s'ils sont placés dans des dalles autoportées, ces dalles peuvent être de forme différente. La station peut notamment être constituée d'une seule pièce. On pourrait aussi envisager que certaines dalles comprennent une pluralité de bornes.

En outre, le support du plateau peut être constitué d'une unique pièce au lieu d'une pluralité de cornières. On pourrait également envisager que le corps de borne ait une configuration totalement différente de celle décrite et/ou soit d'un seul tenant avec le plateau. Le plateau pourrait également être monté sur un axe relié au reste de la structure.

## Revendications

1. Module de charge pour la recharge électrique d'un véhicule électrique, comprenant des moyens (18A-18C) de connexion électriques aptes à coopérer avec des moyens complémentaires du véhicule, le module comprenant un socle (30) et un corps de borne (10), et étant **caractérisé en ce qu'**il est configuré de sorte que le corps de borne (10, 40) soit mobile en rotation relativement au socle (30), de sorte que le corps ne puisse pas effectuer une rotation d'un angle supérieur à un angle de seuil, inférieur à 360°.

2. Module selon la revendication précédente, dans lequel le corps de borne (10) peut également être muni de moyens de détection (24) aptes à détecter la présence d'un véhicule sur un emplacement de stationnement associé au module de charge.

3. Module selon l'une quelconque des revendications précédentes, comprenant des câbles disposés essentiellement verticalement dans le corps de borne et sont destinés à relier les moyens de connexion électrique (18C) et un réseau électrique.

4. Module selon l'une quelconque des revendications précédentes, comprenant des moyens de verrouillage amovibles (54, 57 , 59) du corps de borne dans une orientation prédéterminée.

5. Module selon la revendication précédente, dans lequel les moyens de verrouillage (54, 57, 59) sont configurés pour autoriser le verrouillage en plusieurs positions du corps de borne relativement au socle.

6. Module selon l'une quelconque des revendications précédentes, dans lequel le corps de borne (10) est fixé sur un plateau (40) apte à être mobile en rotation relativement au socle (30).

7. Module selon les revendications 5 et 6 en combinaison, dans lequel les moyens de verrouillage comprennent une collerette (54) apte à chevaucher le plateau (40) et montée serrée sur le socle (30) de façon à compresser le plateau (40).

8. Module selon l'une quelconque des revendications 6 et 7, configuré de sorte que le plateau (40) comprend au moins une butée (56), notamment une seule, apte à coopérer avec une butée complémentaire (58), notamment une seule, du socle (30) afin d'empêcher la rotation du plateau (40) au-delà de l'angle de seuil.

9. Module selon l'une quelconque des revendications 5 à 8, dans lequel le socle présente une ouverture ronde (48) et comprend un support (50) sur lequel est agencé le plateau (40) avec interposition d'au moins une bague de glissement (52), le plateau (40) étant de forme complémentaire de celle de l'ouverture et le support étant placé de sorte que le plateau soit inséré dans l'ouverture (48).

10. Module selon la revendication précédente, dans lequel le support comprend une pluralité de pièces (50) essentiellement linéaires placées autour de l'ouverture (48)

11. Module selon l'une quelconque des revendications précédentes, dans lequel le socle (30) comprend une dalle autoportée, le support (50) étant notamment solidaire de la dalle.

12. Station de charge (60) pour recharge de véhicules électriques, comprenant au moins un module de charge (30A-30K) selon l'une quelconque des revendications précédentes.

13. Station selon la revendication précédente, comprenant une pluralité de modules de charge, dans laquelle les socles (30) des modules sont d'un seul tenant.
